# EUROPEAN PATENT APPLICATION

(11) **EP 1 168 755 A1**
(43) Date of publication of application: **02.01.2002**
(21) Application number: 00850110.8
(22) Date of filing: 20.06.2000
(51) Int. Cl.: H04L 29/06, H04L 12/64, H04L 12/56

(54) **Admission control at Internet telephony gateway according to network performance**

(71) Applicant: Telefonaktiebolaget L M Ericsson (Publ), 126 25 Stockholm (SE)
(72) Inventor: Szab , István, 1037 Budapest (HU)
(74) Representative: Bjelkstam, Peter

(57) **Abstract**

In a method and a system an Internet Protocol (IP) telephony gateway is given a threshold for the performance indicators of the RTCP, and only accepts an incoming call if the present value of the performance indicators are below the given threshold value. By monitoring the quality of ongoing calls, the IP telephony gateway determines whether or not to accept a new incoming call. The method for monitoring the ongoing calls can in particular be the RTCP mechanism, which in some cases already is implemented in the IP telephony gateway, and in which case no new mechanism for monitoring the ongoing calls is required. However, if in some application it should turn out to use another mechanism for monitoring ongoing calls this mechanism could of cause be used in stead or as a supplement. Also, other methods than using a threshold value for accepting/rejecting incoming calls can be used. For example, a function of one or several performance indicating values can be formed. The additional logic required is preferably software implemented making it possible to easily change threshold values, parameters used in the determination process etc.

## Description

### TECHNICAL FIELD

The present invention relates to a method and a system for setting up a connection in an Internet Protocol (IP) network. In particular the present invention relates to a method and a system for accepting or rejecting an incoming call, which is to be transmitted over an IP network.

### BACKGROUND OF THE INVENTION AND PRIOR ART

Today there is a demand for services offering real time traffic over an Internet Protocol (IP) network. For example when establishing a connection for IP-telephony, the users demand real time traffic.

In order to meet this demand a transport protocol termed RTP has been developed for carrying real time traffic over an Internet Protocol (IP) network. The RTP is described in H.Schulzrinne et al.: "RTP: A Transport Protocol for Real-Time Applications, RFC 1889, January, 1996. The paper by H. H.Schulzrinne also describes a mechanism termed RTCP used for gathering statistics about an RTP session. The RTCP can collect and output information regarding statistics such as delay, jitter and packet-loss ratio. Thus, for each individual call it is possible to obtain statistics relating to the quality of the call.

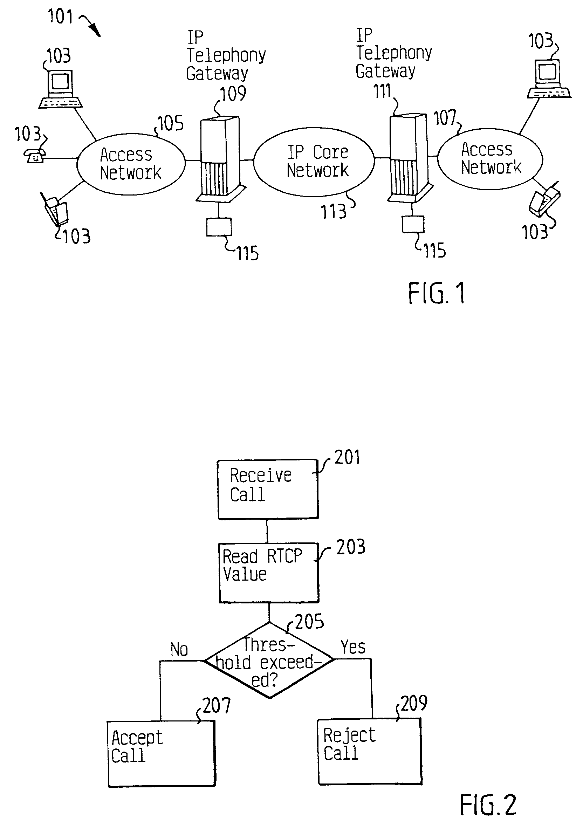

Recently it has been proposed to extend the RTP enabling multiplexing of low bit-rate compressed voice steams from different sources into a single RTP packet. When setting up a call over an Internet Protocol (IP) network, the following steps will then be performed. First a call is initiated from a subscriber over an Access Network (AN), see Fig. 1. The Access Network is connected to an Internet Protocol (IP) telephony gateway, which communicates with other Internet Protocol (IP) telephony gateways over an Internet Protocol (IP) core network.

The gateway, which receives packets from many subscribers multiplexes packets from multiple sources which packets are destined to the same remote Access Network. The packets are multiplexed into a single RTP/UDP(User Datagram Protocol)/IP (Internet Protocol) packet. Also, it exists other ways of multiplexing Internet Protocol telephony calls. For example, the method as described in B. Thompson et al. "Tunnelling Multiplexed Compressed RTP", Internet Draft, March 2000, Work in Progress, according to which a multitude of RTP/UDP/IP packets are compressed and then multiplexed into a so called PPP packet before being transmitted over an IP core network.

When a call establishment message is received by an Internet Protocol (IP) telephony gateway it is important the Internet Protocol (IP) telephony gateway ensures that a high quality transmission path is available to the remote Internet Protocol (IP) telephony gateway being connected to the remote Access Network to which remote Access Network the call is destined.

If the Internet Protocol (IP) telephony gateway is capable of ensuring a transmission path having an acceptable transmission quality the call is accepted and the call establishment procedure is allowed to proceed. Otherwise, if the transmission path is deemed to not have an acceptable transmission quality the call is rejected, and the gateway returns a negative acknowledgement.

In order to ensure a transmission path having a high transmission quality, a number of methods have been suggested:
1. An Internet Protocol (IP) telephony gateway implemented in accordance with the IETF intserv framework, see R.Braden et al.: "Resource Reservation Protocol (RSVP)", RFC 2202, September, 1997, and J. Wroclawski: "The Use of RSVP with Integrated Services", RFC 2210, September, 1997, operates as follows: Upon arrival of a call establishment message, the Internet Protocol (IP) telephony gateway issues a resource reservation message travelling through the core of the network. Thus, each router along the transmission path examines the request and reserves the necessary resources. If the resource reservation is successful, the Internet Protocol (IP) telephony gateway receives an acknowledgement and the call establishment proceeds towards the remote Internet Protocol (IP) telephony gateway.
2. An Internet Protocol (IP) telephony gateway assuming an over-dimensioned core network can admit all received calls without making an effort to ensure that a high quality transmission path exists.
3. An Internet Protocol (IP) telephony gateway implemented in accordance with the load control method, see L. Westberg, Z.R. Turanyi, "Load Control of Real-Time Traffic", Internet draft, June, 1999, would operate as follows. Upon arrival of a call to the Internet Protocol (IP) telephony gateway, the Internet Protocol (IP) telephony gateway would send a probe packet to the core network. Each router in the core network continuously maintains information about the current traffic load. When a router receives a probe packet, and the router is congested, the router marks the probe packet. The remote Internet Protocol (IP) telephony gateway encapsulates the header of the probe packet into the payload of a new, second, probe packet and sends the telephony gateway, which initiated the first probe packet. When the second probe packet arrives at the initiating Internet Protocol (IP) telephony gateway, it can, based on the information in the second probe packet, determine if the core network is congested or not. If the core network is determined to be congested, the Internet Protocol (IP) telephony gateway rejects the call. Otherwise, the call is accepted and establishment of the call proceeds.

However, all present methods for ensuring a transmission path having a high quality are associated with drawbacks. Thus, the first method requires per-flow states to be installed in each core router. Furthermore, the time used for the resource reservation message to travel through the core network can significantly delay the establishment of the call. The second method can only be used when it can be guarantied that the core network is over-dimensioned, otherwise the performance of the network will be significantly reduced. The third method delays the call establishment. Also, each core router has to be provided with the proper software in order to treat the probe packets in a proper way.

### SUMMARY

It is an object of the present invention to overcome the problems as outlined above and to provide a method and a system, which can ensure a transmission path having a high quality over an Internet Protocol (IP) core network, and which method is fast and which is inexpensive to implement in an existing Internet Protocol (IP) core network.

This object and others are obtained by a method and a system wherein the Internet Protocol (IP) telephony gateway is given a threshold for the performance indicators of the RTCP, and only accepts an incoming call if the present value of the performance indicators are below the given threshold value.

In particular, the Internet Protocol (IP) telephony gateway collects statistics for a number of on-going calls and based on the collected statistics determines whether or not to admit a new call. For example, an average value for a number of calls can be calculated

Thus, by monitoring the quality of ongoing calls, the IP telephony gateway determines whether or not to accept a new incoming call. The method for monitoring the ongoing calls can in particular be the RTCP mechanism, which in some cases already is implemented in the IP telephony gateway, and in which case no new mechanism for monitoring the ongoing calls is required. However, if in some application it should turn out to use another mechanism for monitoring ongoing calls this mechanism could of cause be used instead or as a supplement. Also, other methods than using a threshold value for accepting/rejecting incoming calls can be used. For example, a function of one or several performance indicating values can be formed.

The additional logic required is preferably software implemented making it possible to easily change threshold values, parameters used in the determination process etc.

### BRIEF DESCRIPTION OF THE DRAWINGS

The present invention will now be described in more detail and with reference to the accompanying drawings, in which:
- Fig. 1 is a general view of an Internet telephony network, and
- Fig. 2 is a flowchart illustrating different steps carried out when accepting an Internet Protocol (IP) telephony call in an IP telephony gateway.

### DESCRIPTION OF PREFERRED EMBODIMENTS

In Fig. 1, a general view of an Internet telephony network 101 is shown. The network 101 comprises a number of subscribers 103 connected to a number of Access Networks (AN), such as the Access Networks 105 and 107. Each Access Network is connected to an Internet Protocol (IP) telephony gateway. In the example shown in Fig. 1, the Access Network 105 is connected to an IP telephony gateway 109, and the Access Network 107 is connected to an IP telephony gateway 111. The IP telephony gateways 109 and 111 are interconnected by an Internet Protocol (IP) core network 113.

Furthermore, each of the gateways 109 and 111 has access to the RTCP mechanism as indicated by the reference numeral 115.

In Fig.2, a flowchart illustrating different steps performed in an IP telephony gateway as shown in Fig. 1, when accepting an incoming call is shown. Thus, when a call is to be established between a first subscriber connected to a first IP telephony gateway and a second subscriber connected to a second IP telephony gateway, for example a first subscriber connected to the Access Network 105 and a second subscriber connected to the Access Network 107, the following steps can be performed.

First, in a step 201, a call from a subscriber is received by the IP telephony gateway. Thereupon in a step 203 the current values of the RTCP mechanism are read. Next in a step 205 it is checked if one or several of the values read from the RTCP

If in step 205 it is determined that no values read from the RTCP mechanism exceed such a pre-set threshold value, the call establishment procedure is allowed to continue as usual in a step 207. If, on the other hand, it is determined in the step 205 that at least one of the threshold values is exceeded, the IP telephony gateway rejects the call and transmits a negative acknowledgement message back to the subscriber who has initiated the call, in a step 209.

In particular the IP telephony gateway in step 203 reads the "FRACTION_LOST" and "INTERARRIVAL JITTER" values from the RTCP mechanism. The FRACTION_LOST value indicates the amount of packets lost between two subsequent reports. The INTERARRIVAL JITTER value indicates the mean deviation in the difference of packet spacing at the receiver compared to the packet spacing at the sender. These two values are in RTCP reported on a regular basis.

In a preferred embodiment the method as described above is implemented in an IETF diffserv environment, see S.Blake et al. "An Architecture for Differentiated Services" RFC 2475, December 1998. The voice traffic is preferably transmitted using a service, which ensures that a packet is either lost or transmitted through the network with a very small delay, for example using Expedited Forwarding. During an up-start phase, when no information is available, all incoming calls can be accepted.

Further, the round trip delay can also be estimated using the RTCP mechanism. Thus, the method is applicable in best effort type of networks for providing a performance guaranty for telephone calls, but in such a case not only packet loss but also packet delay statistics should be collected from the network.

Thus, by monitoring the quality of ongoing calls, the IP telephony gateway determines whether or not to accept a new incoming call. The method for monitoring the ongoing calls can for example be the RTCP mechanism, which in some cases already is implemented in the IP telephony gateway, and in which case no new mechanism for monitoring the ongoing calls is required. However, if in some application it should turn out to use another mechanism for monitoring ongoing calls this mechanism could of cause be used in stead or as a supplement. Also, other methods than using a threshold value for accepting/rejecting incoming calls can be used. For example, a function of one or several performance indicating values can be formed.

By using the method and system as described herein for determining if to accept or reject an incoming call in an IP telephony gateway a very cost efficient rejection mechanism is obtained. Also, the mechanism is robust and returns an accept message or reject message very quickly compared to existing mechanisms.

## Claims

1. A method of determining if an incoming Internet Protocol (IP) telephone call is to be accepted over an Internet Protocol (IP) network, **characterized by** the steps of:
- receiving an incoming call
- reading at least one current performance value provided by a monitoring mechanism, and
- based on the read value determining if the incoming call is to be accepted.

2. A method according to claim 1, **characterized in that** said at least one performance value is provided by a RTCP mechanism.

3. A method according to any of claims 1 or 2, **characterized in that** said at least one performance value is a value indicating the number of lost packets and/or the difference between packet spacing at the receiver and at the sender.

4. A method according to any of claims 1 - 3, **characterized in that** the determination if the incoming call is to be accepted is made using a threshold value.

5. A system for determining if an incoming Internet Protocol (IP) telephone call is to be accepted in an Internet Protocol telephony Gateway for transmission over an Internet Protocol (IP) network, **characterized by :**
- means for receiving an incoming call
- means for reading at least one current performance value provided by a monitoring mechanism, and
- means for accepting or rejecting the incoming call based on the read value determining.

6. A system according to claim 5, **characterized in that** said at least one performance value is provided by a RTCP mechanism.

7. A system according to any of claims 5 or 6, **characterized in that** said at least one performance value is a value indicating the number of lost packets and/or the difference between packet spacing at the receiver and at the sender.

8. A system according to any of claims 5 - 7, **characterized in that** the determination if the incoming call is to be accepted is made using a threshold value.

9. A computer program for determining if an incoming Internet Protocol (IP) telephone call is to be accepted over an Internet Protocol (IP) network, and which when run on a computer, executes the steps of:
- based on at least one current performance value provided by a monitoring mechanism determining if the incoming call is to be accepted, and
- output a signal indicating if the call is to be rejected or accepted in response to said determination.

10. A computer program according to claim 9, **characterized in that** said at least one performance value is provided by a RTCP mechanism.

11. A computer program according to any of claims 9 or 10, **characterized in that** said at least one performance value is a value indicating the number of lost packets and/or the difference between packet spacing at the receiver and at the sender.

12. A computer program according to any of claims 9 - 11, **characterized in that** the determination if the incoming call is to be accepted is made using a threshold value.
